(19) Europäisches Patentamt
European Patent Office
Office européen des brevets

(11) **EP 3 968 177 A1**

(12) **EUROPEAN PATENT APPLICATION**
published in accordance with Art. 153(4) EPC

(43) Date of publication:
**16.03.2022 Bulletin 2022/11**

(51) Int Cl.:
***G06F 16/29*** (2019.01)

(21) Application number: **21786739.9**

(22) Date of filing: **22.06.2021**

(86) International application number:
**PCT/CN2021/101578**

(87) International publication number:
**WO 2022/012281 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2020 CN 202010688817**

(71) Applicant: **Guangzhou Xiaopeng Autopilot
Technology Co., Ltd.
Guangzhou, Guangdong 510640 (CN)**

(72) Inventors:
• **LIU, Zhongyuan
Guangzhou, Guangdong 510640 (CN)**

• **CHAI, Wennan
Guangzhou, Guangdong 510640 (CN)**
• **LI, Hongjun
Guangzhou, Guangdong 510640 (CN)**
• **HUANG, Ya
Guangzhou, Guangdong 510640 (CN)**
• **XIAO, Zhiguang
Guangzhou, Guangdong 510640 (CN)**
• **JIANG, Shaofeng
Guangzhou, Guangdong 510640 (CN)**

(74) Representative: **DREISS Patentanwälte PartG
mbB
Friedrichstraße 6
70174 Stuttgart (DE)**

(54) **MAP FUSION METHOD AND VEHICLE, ELECTRONIC DEVICE, AND STORAGE MEDIUM**

(57) Embodiments of the present disclosure provides a method of map fusion, a vehicle, an electronic device and a storage medium. The method includes: acquiring data of at least two maps for a target area; determining a target beam system mechanical model for the target area, and determining connection relation information for a road in the target area by using the data of the at least two maps; obtaining map correction information based on the target beam system mechanical model and the connection relation information; and fusing the data of the at least two maps in accordance with the map correction information. According to the embodiments of the present disclosure, the maps are fused by combining the beam system mechanical model and the connection relation of the road, which avoids a problem of changing a road relation caused by fusion in a weighted average method, eliminates an operation of image processing on the map data, reduces calculation, and guarantees a precision of map fusion.

FIG. 1

**Description**

**CROSS-REFERENCE TO RELATED APPLICATIONS**

The present application claims priority to Chinese Patent Application No. 202010688817.8, titled "METHOD OF MAP FUSION, VEHICLE, ELECTRONIC DEVICE AND STORAGE MEDIUM", and filed on July 16, 2020, the entire content of which is incorporated herein by reference.

**TECHNICAL FIELD**

The present disclosure relates to the field of map technology, and more particularly, to a method of map fusion, a vehicle, an electronic device, and a storage medium.

**BACKGROUND**

An electronic map is a map stored and consulted in a data form, and has become an essential tool in daily traveling of people. In order to acquire a map with higher precision, map data can be fused.

In a process of map data fusion, a weighted average method is usually used for fusion. However, since the map data generally includes a plurality of pieces of road information and complex road relations, a problem of changing the road relations, such as road disconnection, may occur when the map fusion is directly performed in the weighted average method.

In the related art, in order to avoid an influence caused by the map fusion by using the weighted average method, an image processing is usually performed on the fused map data, even manual processing is required, and the operation of performing image processing on the map data increases the calculation and cannot ensure a precision of map fusion.

**SUMMARY**

In view of the above problems, the present disclosure provides a method of map fusion, a vehicle, an electronic device, and a storage medium to overcome the above problems or at least partially solve the above problems.

The method of map fusion, including: acquiring data of at least two maps for a target area; determining a target beam system mechanical model for the target area, and determining connection relation information for a road in the target area by using the data of the at least two maps; obtaining map correction information based on the target beam system mechanical model and the connection relation information; and fusing the data of the at least two maps in accordance with the map correction information.

Optionally, said obtaining the map correction information based on the target beam system mechanical model and the connection relation information includes: determining a correction amount for the road in the target area by using the data of the at least two maps; and obtaining the map correction information based on the target beam system mechanical model, the connection relation information, and the correction amount.

Optionally, said obtaining the map correction information based on the target beam system mechanical model, the connection relation information, and the correction amount includes: determining a total stiffness matrix for the target beam system mechanical model by using the connection relation information; determining node force parameters for the target beam system mechanical model by using the correction amount; and obtaining the map correction information by combining the total stiffness matrix, the node force parameters and the target beam system mechanical model.

Optionally, said determining the total stiffness matrix for the target beam system mechanical model by using the connection relation information includes: determining a plurality of unit stiffness matrices by using the connection relation information; determining a coordinate transformation matrix by using the data of the at least two maps; obtaining global coordinate information by combining the plurality of unit stiffness matrices and the coordinate transformation matrix; and determining the total stiffness matrix for the target beam system mechanical model by using the global coordinate information.

Optionally, said determining the correction amount for the road in the target area by using the data of the at least two maps includes: determining maturity information for the data of the at least two maps; determining elasticity information for a node in the target area and stiffness information for the road in the target area by using the maturity information; and determining the correction amount for the road in the target area by combining the elasticity information and the stiffness information.

Optionally, the target beam system mechanical model includes a three-link beam system mechanical model.

Optionally, the target area is a parking lot.

A vehicle, including: a map data acquisition module configured to acquire data of at least two maps for a target area; a model and connection relation determining module configured to determine a target beam system mechanical model for the target area, and determine connection relation information for a road in the target area by using the data of the at least two maps; a map correction information obtaining module configured to obtain map correction information based on the target beam system mechanical model and the connection relation information; and a map data fusion module configured to fuse the data of the at least two maps based on the map correction information.

An electronic device, including a processor, a memory, and a computer program stored on the memory and executable on the processor, wherein the computer program, when executed by the processor, implements the method of map fusion as described above.

A computer-readable storage medium having a computer program stored thereon, wherein the computer program, when executed by a processor, implements the method of map fusion as described above.

The embodiments of the present disclosure have the following advantages.

In the embodiments of the present disclosure, data of at least two maps for the target area are acquired; the target beam system mechanical model for the target area is determined, and the connection relation information for the road in the target area is determined by using the data of at least two maps; the map correction information is obtained based on the target beam system mechanical model and the connection relation information; and the data of at least two maps are fused in accordance with the map correction information. Therefore, maps are fused in conjunction with the beam system mechanical model and the connection relation of the road, avoiding the problem of changing the road relation caused by fusion in a weighted average method, eliminating the operation of performing image processing on the map data, reducing the calculation, and guaranteeing the precision of map fusion.

## BRIEF DESCRIPTION OF DRAWINGS

In order to clearly explain technical solutions of the present disclosure, drawings used in the description of the present disclosure are briefly described below. Apparently, the drawings as described below are merely some embodiments of the present disclosure. Based on these drawings, other drawings can be obtained by those skilled in the art without creative effort.

FIG. 1 is a flowchart illustrating steps of a method for map fusion according to an embodiment of the present disclosure;
FIG. 2 is a flowchart illustrating steps of another method for map fusion according to an embodiment of the present disclosure;
FIG. 3 is a flowchart illustrating steps of still another method for map fusion according to an embodiment of the present disclosure;
FIG. 4 is a flowchart illustrating steps of yet another method for map fusion according to an embodiment of the present disclosure; and
FIG. 5 is a schematic diagram of a structure of a vehicle for map fusion according to an embodiment of the present disclosure.

## DESCRIPTION OF EMBODIMENTS

In order to make the above objects, features and advantages of the present disclosure more apparent and understandable, the present disclosure will be further described in detail below in conjunction with the accompanying drawings and specific embodiments. Apparently, embodiments described here are only part of embodiments of the present disclosure and are not all embodiments of the present disclosure. Based on the embodiments of the present disclosure, other embodiments obtained by those skilled in the art without creative labor are within the protection scope of the present disclosure.

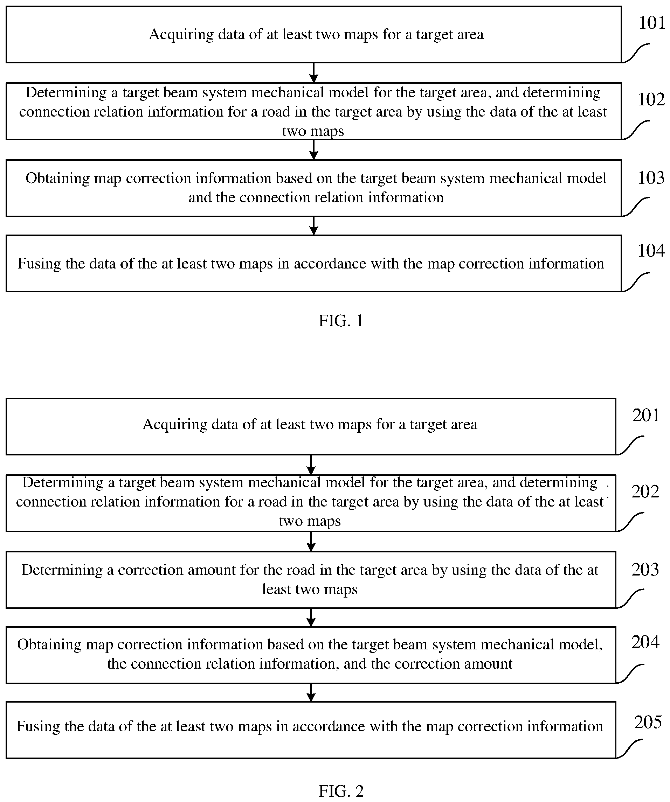

Referring to FIG. 1, FIG. 1 is a flowchart illustrating steps of a method for map fusion according to an embodiment of the present disclosure. The method may specifically include the following steps 101 to 104.

In step 101, data of at least two maps for a target area are acquired.

The target area may be a parking lot, and the map data can be pre-stored in a vehicle, or generated in real time, or downloaded from a cloud.

In the process of map fusion, a target area can be determined, and then data of at least two maps for the target area can be acquired.

For example, an area where the vehicle enters or an area designated by the user may be determined as the target area, and when the target area is determined as a parking lot, data of at least two maps for the parking lot may be acquired from map data pre-stored by the vehicle.

In step 102, a target beam system mechanical model for the target area is determined, and connection relation information for a road in the target area is determined by using the data of the at least two maps.

The mechanical model refers to an expression of an abstracted mechanical relation based on geometric characteristics and the like of a research object, and the beam system mechanical model is a mechanical model of a beam system in the mechanical models, the target beam system mechanical model may include a three-link beam system mechanical model, and the connection relation information for the road may represent the connection relation of the road, such as connection at an end point of the road and connection at a midpoint of the road.

After the data of at least two maps are obtained, a topological map can be obtained based on the data of the at least two maps, where the topological map refers to a statistical map in cartography, and an abstract map which keeps relative position relations between points and lines correct but does not necessarily keep graphical shape, area, distance and direction correct, then a target beam system mechanical model for the target area can be determined in the topological map, for example, the target beam system mechanical model for the parking lot is determined, and the connection relation information for the road in the target area can be determined by using the data of the at least two maps.

In practical application, the road information matched in the target area can be determined by using the data of the at least two maps, and then the connection relation information for the road in the target area can be determined based on the matched road information.

In step 103, map correction information is obtained based on the target beam system mechanical model and the connection relation information.

The map correction information may be displacement information, such as displacement information of a node and displacement information of the road, or may be angle information, such as angle information of road deflection.

After the target beam system mechanical model and the connection relation information for the road are determined, parameters in the target beam system mechanical model can be determined based on the connection relation information, and the map correction information can be obtained through calculation of the target beam system mechanical model.

In step 104, the data of at least two maps are fused in accordance with the map correction information.

After the map correction information is obtained, the data of one of at least two maps may be designated, and the data of the designated map can be fused with the rest map data in accordance with the map correction information, or the data of the at least two maps may be fused in the topological map in accordance with the map correction information.

For example, during the map fusion, the data of one of the at least two maps may be designated; after displacement information of all nodes is obtained, all nodes in the data of the designated map may be corrected based on the displacement information, and unmatched road information is added to the data of the designated map to obtain the fused map data; and during the map fusion, all roads in the data of the designated map that match the rest map data may be corrected in accordance with the map correction information, so as to complete the fusion of the data of the at least two maps.

In the embodiments of the present disclosure, data of at least two maps for the target area are acquired; the target beam system mechanical model for the target area is determined, the connection relation information for the road in the target area is determined by using the data of the at least two maps; the map correction information is obtained based on the target beam system mechanical model and the connection relation information; and the data of the at least two maps are fused in accordance with the map correction information, which realizes the fusion of the maps based on the beam system mechanical model and the connection relation of the road, avoiding a problem of changing a road relation caused by fusion in a weighted average method, eliminating an operation of image processing on the map data, reducing the calculation, and guaranteeing a precision of map fusion.

Referring to FIG. 2, FIG. 2 is a flowchart illustrating steps of another method for map fusion according to an embodiment of the present disclosure. The method specifically includes the following steps 201 to 205.

In step 201, data of at least two maps for a target area are acquired.

In step 202, a target beam system mechanical model for the target area is determined, and connection relation information for a road in the target area is determined by using the data of the at least two maps.

In step 203, a correction amount for the road in the target area is determined by using the data of the at least two maps.

The correction amount may include a displacement correction amount and an angle correction amount.

After the target beam system mechanical model and the connection relation information for the road is determined, a road matched in the target area and the position information of the road can be determined by using the data of the at least two maps, and then the correction amount for the road matched in the target area can be determined through calculation for the matched road based on the position information.

For example, one matched road in data of two maps can be determined, then, the position information of the matched road can be respectively determined, and the position information of the matched road after fusion can be calculated in the topological map, and the displacement correction amount and the angle correction amount for the matched road can be obtained through calculation of the position information after fusion and the position information before fusion.

In step 204, map correction information is obtained based on the target beam system mechanical model, the connection relation information, and the correction amount.

After the correction amount is determined, parameters in the target beam system mechanical model are determined based on the connection relation information and the correction amount, and then the map correction information can be calculated by the target beam system mechanical model.

For example, after obtaining the displacement correction amount and the angle correction amount of one of the matched roads, the correction amounts can be determined as parameters of the target beam system mechanical model, and then, the map correction information can be obtained through calculation of the target beam system mechanical model by combining the connection relation information.

In step 205, the data of at least two maps are fused in accordance with the map correction information.

In the embodiment of the present disclosure, data of at least two maps for the target area are acquired, the target beam system mechanical model for the target area is determined, the connection relation information for the road in the target area is determined by using the data of the at least two maps, and the correction amount for the road in the target area is determined by using the data of at least two maps. In this way, the fusion of the maps is realized by combining the connection relation information, the correction amount, and the target beam system mechanical model, avoiding a problem of changing a road relation caused by fusion in a weighted average method, eliminating an operation of image processing on the map data, reducing the calculation, and guaranteeing a precision of map fusion.

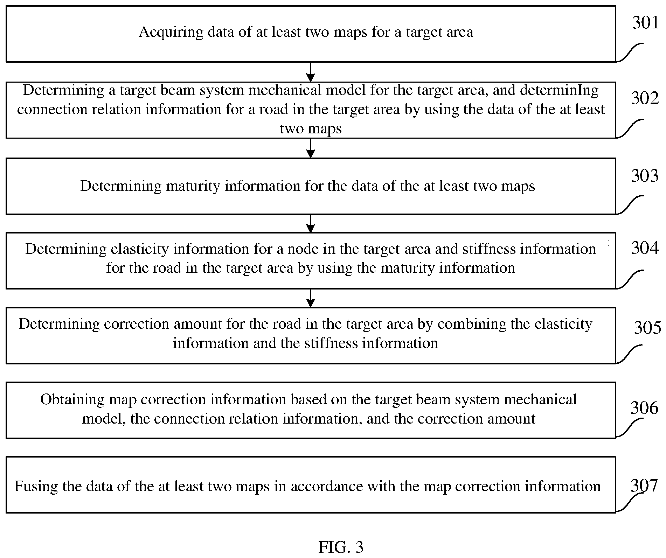

Referring to FIG. 3, FIG. 3 is a flowchart illustrating steps of still another method for map fusion according to an embodiment of the present disclosure. The method specifically includes the following steps 301 to 307.

In step 301, data of at least two maps for a target area are acquired.

In step 302, a target beam system mechanical model for the target area is determined, and connection relation information for a road in the target area is determined by using the data of the at least two maps.

In step 303, maturity information for the data of the at least two maps is determined.

The maturity information may be a number of fusion times of data of a map.

After the target beam system mechanical model and the connection relation information for the road are determined, the maturity information of the data of the at least two maps, such as the number of fusion times of the data of the maps, can be determined.

For example, the number of fusion times of data of map A is determined as 0 and the number of fusion time of data of map B is determined as 2, indicating that the data of map A is data of a map that has not been fused, and the maturity information of the data of map A is 0; and the data of map B is data of a map that has been fused twice, and the maturity information of the data of map B is 2.

In step 304, elasticity information for a node in the target area and stiffness information for the road in the target area are determined by using the maturity information.

The node may be a connection point of a road in the target area, the elasticity information for the node may represent a degree of displacement of the node during road fusion, and the stiffness information for the road may represent a degree of deflection of the road.

After the maturity information of the data of the maps is determined, the elasticity information for the node in the target area corresponding to the maturity information may be determined, and the stiffness information for the road in the target area corresponding to the maturity information may be determined.

In practical applications, the elasticity information for the node and the stiffness information for the road may be preset values corresponding to different maturity information, or values input by a user according to the maturity information, or values obtained through calculation with the maturity information.

For example, the elasticity information and the stiffness information corresponding to different maturity information may be set in advance. When the maturity information is 1, the corresponding elasticity information may be set to be 1, and the corresponding stiffness information may be set to be 1; and when the maturity information is 2, the corresponding elasticity information may be set to be 2, and the corresponding stiffness information may be set to be 2.

When the maturity information is determined as 1, the elasticity information for the node in the target area may be determined as 1, and the stiffness information for the road in the target area may be determined as 1, by using the maturity information.

In step 305, correction amount for the road in the target area is determined by combining the elasticity information and the stiffness information.

After the elasticity information and the stiffness information are determined, the road matched in the target area and the position information of the road can be determined by using the data of at least two maps, and then the correction amount for the road in the target area can be determined through calculation of the position information of the road by combining the elasticity information and the stiffness information, or through calculation of the position information of the road in the topological map by combining the elasticity information and the stiffness information.

For example, by using the data of at least two maps, roads matched in the data of the at least two maps can be determined, and then one of the matched roads may be determined. When the elasticity information for the node of the road is determined as 1 and the stiffness information for the road is determined as 2, the displacement correction amount of the node can be calculated by combining the elasticity information for the node, the angle correction amount of the road can be calculated by combining the stiffness information for the road, and then the correction amount of the road can be determined based on the displacement correction amount and the angle correction amount.

In an embodiment of the present disclosure, step 305 may further include the following sub-steps 11 to 12.

In sub-step 11, data of the topological map for the target area is acquired.

After the elasticity information and the stiffness information are determined, the road matched in the target area and the position information of the road can be determined by using the data of at least two maps, and then the data of the topological map for the target area can be determined based on the position information.

In sub-step 12, the correction amount for the road in the target area is determined by combining the elasticity information, the stiffness information and the data of the topological map.

After the data of the topological map is obtained, the correction amount for the road in the target area can be determined through calculation for the road in the topological map by combining the elasticity information and the stiffness information.

In an embodiment of the present disclosure, the sub-step 12 may further includes: determining first road information for the road in the target area from the data of the at least two maps; determining second road information for the road in the target area from the data of the topological map by combining the elasticity information and the stiffness information; and obtaining the correction amount for the road in the target area by using the first road information and the second road information.

After the data of the topological map is obtained, location information, such as coordinate information, of the road in the target area can be determined from the data of the maps.

After the position information in the data of the maps is determined, position information of the corresponding road in the data of the topological map can be determined, and then the corrected position information for the road can be obtained through calculation of the position information by combining the elastic information and the stiffness information in the topological map data.

After the corrected position information in the data of the topological map is obtained, the displacement correction amount and the angle correction amount between the position information before the correction and the corrected position information can be determined through calculation of the position information before the correction and the corrected position information in the data of the topological map, and the correction amount for the road in the target area can be determined based on displacement correction amount and the angle correction amount.

In practical application, the topological map is an abstract map which keeps the relative position relation between points and lines correct and does not necessarily keep the graphical shape, area, distance and direction correct, and therefore, when the position information of the road in the topological map is calculated, only the relative position relation of the road needs to be considered, and other details in the map do not need to be considered, which reduces the calculation, and will not change the position information of the road in the data of the map.

In Step 306, map correction information is obtained based on the target beam system mechanical model, the connection relation information, and the correction amount.

In step 307, the data of the at least two maps are fused in accordance with the map correction information.

In the embodiment of the present disclosure, the data of at least two maps for the target area are acquired, the target beam system mechanical model for the target area is determined, the connection relation information for the road in the target area is determined by using the data of the at least two maps, the maturity information for the data of at least two maps is determined, the elasticity information for the node in the target area and stiffness information for the road in the target area are determined by using the maturity information, and the correction amount for the road in the target area is determined by combining the elasticity information and the stiffness information, the map correction information is obtained based on the target beam system mechanical model, the connection relation information, and the correction amount, and then the data of the at least two maps are fused in accordance with the map correction information.

Thus, the correction amount is determined by using the maturity information, and the maps are fused by combining the connection relation information, the correction amount and the target beam system mechanical model, which avoids a problem of changing a road relation caused by fusion in a weighted average method, eliminates an operation of image processing on the map data, reduces the calculation, and guarantees a precision of map fusion.

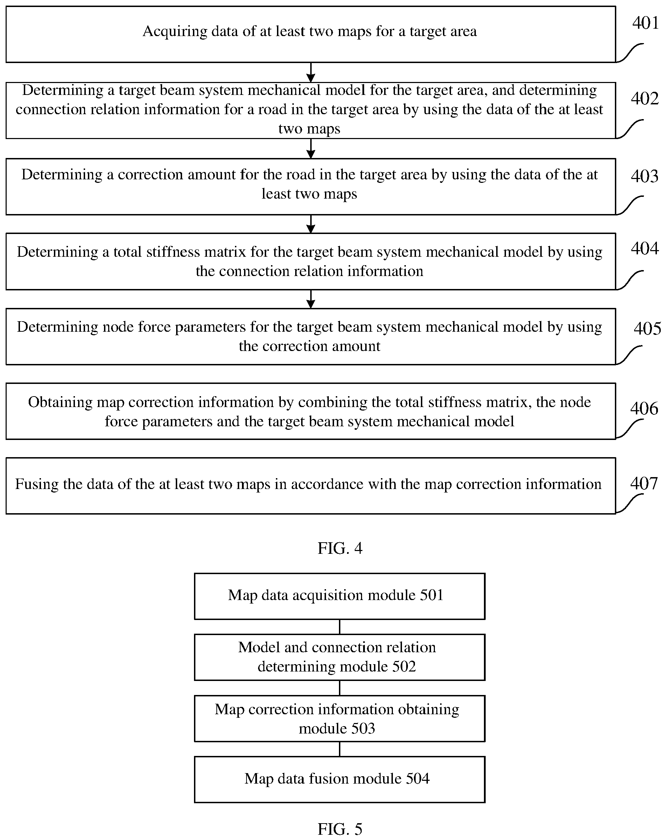

Referring to FIG. 4, FIG. 4 is a flowchart illustrating steps of yet another method for map fusion according to an embodiment of the present disclosure. The method specifically includes the following steps 401 to 404.

In step 401, data of at least two maps for a target area are acquired.

In step 402, a target beam system mechanical model for the target area is determined, and connection relation information for a road in the target area is determined by using the data of the at least two maps.

In step 403, a correction amount for the road in the target area is determined by using the data of the at least two maps.

In step 404, a total stiffness matrix for the target beam system mechanical model is determined by using the connection relation information.

The total stiffness matrix may be a matrix of a fundamental equation of a displacement method for establishing an overall structure.

After the connection relation information and the correction amount are determined, the overall structure of the roads in the target area can be determined based on the connection relation information, and then the total stiffness matrix for the target beam system mechanical model can be determined.

In practical application, the overall structure of the roads in a different area can be determined by different connection relation information, and then a corresponding total stiffness matrix can be determined. For example, when it is determined that the target area includes two matched roads, and the two roads are connected at one end point thereof, then it can be determined that the overall structure of the roads is a three-link structure, and then the connection relation information is directed correspondingly to a three-link beam system mechanical model.

In an embodiment of the present disclosure, step 404 further includes the following sub-steps 21 to 24.

In sub-step 21, a plurality of unit stiffness matrices are determined by using the connection relation information.

The total stiffness matrix can be formed by unit stiffness matrices in accordance with a stiffness integration rule, and the unit stiffness matrix can be an important coefficient matrix calculated by a finite element method and is characterized by a relation between borne force and deformation of an elementary block.

After the connection relation information and the correction amount are determined, since a plurality of roads matched in the target area can be determined, a plurality of coordinate systems for the matched roads can be determined by using the connection relation information, and then a plurality of unit stiffness matrices for the roads can be determined by using the coordinate systems.

In practical applications, coordinate systems corresponding to a plurality of matched roads may be determined based on the connection relation information, and since the roads in the data of the maps may include a plurality of nodes, coordinate information of the nodes can be then determined, angle information between the matched roads and the coordinate systems can also be determined according to the coordinate systems, and a plurality of unit stiffness matrices for the roads can be obtained through calculation, such as multiplying or addition, of the coordinate information and/or the angle information.

Specifically, the coordinate information and the angle information may be determined as parameters of the unit stiffness matrices, and then the coordinate information and the angle information may be multiplied by a unit stiffness matrix to obtain a plurality of unit stiffness matrices for the roads.

The unit stiffness matrix can be the following matrix:

$$
K^e = \begin{bmatrix}
\dfrac{EA}{l} & 0 & 0 & -\dfrac{EA}{l} & 0 & 0 \\[2mm]
0 & \dfrac{12EI}{l^3} & \dfrac{6EI}{l^2} & 0 & -\dfrac{12EI}{l^3} & \dfrac{6EI}{l^2} \\[2mm]
0 & \dfrac{6EI}{l^2} & \dfrac{4EI}{l} & 0 & -\dfrac{6EI}{l^2} & \dfrac{2EI}{l} \\[2mm]
-\dfrac{EA}{l} & 0 & 0 & \dfrac{EA}{l} & 0 & 0 \\[2mm]
0 & -\dfrac{12EI}{l^3} & -\dfrac{6EI}{l^2} & 0 & \dfrac{12EI}{l^3} & -\dfrac{6EI}{l^2} \\[2mm]
0 & \dfrac{6EI}{l^2} & \dfrac{2EI}{l} & 0 & -\dfrac{6EI}{l^2} & \dfrac{4EI}{l}
\end{bmatrix},
$$

In the matrix, $K^e$ may represent the unit stiffness matrix, E may represent the elasticity information for the node, A may represent the stiffness information for the road, 1 may represent a length of the road, I may represent a moment of inertia of the road, and the moment of inertia may be determined based on coordinate information.

In sub-step 22, a coordinate transformation matrix is determined by using the data of at least two maps.

After the plurality of unit stiffness matrices is determined, the overall structure of the roads matched in the target area can be determined based on the data of the at least two maps, a global coordinate system can be then determined according to the overall structure, and a coordinate transformation matrix can be determined by combining the coordinate systems of the roads and the global coordinate system.

The global coordinate system is a coordinate system with the most nodes falling on the coordinate axes.

In practical application, the global coordinate system can be determined according to the overall structure of the roads, the relative position relation information of the coordinate systems of the roads relative to the global coordinate system, such as included angle information between the coordinate systems of the roads and the global coordinate system, can be calculated by a geometric method, and then the coordinate transformation matrix can be determined according to the position relation information.

The coordinate transformation matrix may be the following matrix:

$$T = \begin{bmatrix} \cos\phi & \sin\phi & 0 & 0 & 0 & 0 \\ -\sin\phi & \cos\phi & 0 & 0 & 0 & 0 \\ 0 & 0 & 1 & 0 & 0 & 0 \\ 0 & 0 & 0 & \cos\phi & \sin\phi & 0 \\ 0 & 0 & 0 & -\sin\phi & \cos\phi & 0 \\ 0 & 0 & 0 & 0 & 0 & 1 \end{bmatrix}$$

In the matrix, T may represent a coordinate transformation matrix, and $\phi$ may represent included angle information between the coordinate system of the road and the global coordinate system.

In sub-step 23, global coordinate information is obtained by combining the plurality of unit stiffness matrices and the coordinate transformation matrix.

After the coordinate transformation matrix is obtained, the coordinate transformation can be performed on the plurality of unit stiffness matrices through the coordinate transformation matrix, and then a plurality of unit stiffness matrices in the global coordinate system can be obtained, so that the global coordinate information can be obtained.

Specifically, the unit stiffness matrices under the global coordinate system may be obtained by using the following formula:

$K = T'K^eT$, where K may represent a unit stiffness matrix in the global coordinate system, $K^\varepsilon$ may represent a unit stiffness matrix, T may represent a coordinate transformation matrix, and T may represent an inverse coordinate transformation matrix.

In sub-step 24, the total stiffness matrix for the target beam system mechanical model is determined by using the global coordinate information.

After the global coordinate information is obtained, the total stiffness matrix for the target beam system mechanical model can be determined through calculation of the global coordinate information.

In practical application, because roads can have a certain connection relation there between, the nodes at the connections of the roads can be determined to be coincident nodes, and when the unit stiffness matrices are subjected to coordinate transformation, coincident global coordinate information can be obtained and determined, then the coincident global coordinate information can be subjected to a summation calculation, and the total stiffness matrix can be determined based on the calculated global coordinate information.

As an example, when the target beam system mechanical model is a three-link beam system mechanical model, the total stiffness matrix can be determined by the following formula:

$$\begin{bmatrix} K_{11}^1 & K_{12}^1 & 0 & 0 \\ K_{21}^1 & K_{22}^1 + K_{22}^2 & K_{23}^2 & 0 \\ 0 & K_{32}^2 & K_{33}^2 + K_{33}^3 & K_{34}^3 \\ 0 & 0 & K_{43}^3 & K_{44}^3 \end{bmatrix}.$$

In the formula, K1 may represent a unit stiffness matrix in a first global coordinate system, K2 may represent a unit stiffness matrix in a second global coordinate system, K3 may represent a unit stiffness matrix in a third global coordinate system, superscripts 1, 2, 3, and 4 may represent four different nodes in the road information, respectively, and subscripts 11, 12, 22, 23, 33, 34, and 44 may represent the road information between two nodes.

In step 405, node force parameters for the target beam system mechanical model are determined by using the correction amount.

After the connection relation information and the correction amount are determined, since the correction amount may include a displacement correction amount and an angle correction amount, the displacement correction amount in the correction amount may be used to represent a coordinate parameter of the node force, the angle correction amount in the correction amount may be used to represent a direction parameter of the node force, and the coordinate parameter and the direction parameter are determined as the node force parameters for the target beam system mechanical model.

In step 406, map correction information is obtained by combining the total stiffness matrix, the node force parameters and the target beam system mechanical model.

After the total stiffness matrix and the correction amount are determined, node displacement information of all nodes can be calculated based on the total stiffness matrix, the node force parameters and the target beam system mechanical model through a formula, and correction information for all matched roads in the data of the maps can be calculated based on the node displacement information, so as to obtain the map correction information, namely displacement information of the nodes.

Specifically, the map correction information may be obtained by the following formula.

An equilibrium equation of beam element:

$$\begin{bmatrix} q_{x1}^1 \\ q_{y1}^1 \\ m_1^1 \\ q_{x2}^1 \\ q_{y2}^1 \\ m_2^1 \end{bmatrix} = T'K^eT \begin{bmatrix} x_1 \\ y_1 \\ \theta_1 \\ x_2 \\ y_2 \\ \theta_2 \end{bmatrix}.$$

In the equation, $q_{x1}^1$ may represent a node force parameter of node 1 in the X-axis direction, $q_{y1}^1$ may represent a node force parameter of the node 1 in the Y-axis direction, $q_{x2}^1$ may represent a node force parameter of the node 2 in the X-axis direction, $q_{y2}^1$ may represent a node force parameter of the node 2 in the Y-axis direction, $m_1^1$ may represent a moment at the node 1, $m_2^1$ may represent a moment at the node 2, x1 may represent a displacement of the node 1 in the X-axis direction of the global coordinate system, x may represent a displacement of the node 2 in the X-axis direction of the global coordinate system, y1 may represent a displacement of the node 1 in the Y-axis direction of the global coordinate system, y2 may represent a displacement of the node 2 in the Y-axis direction of the global coordinate system, θ1 may represent a rotated angle of the node 1 in the global coordinate system, and θ2 may represent a rotated angle of the node 2 in the global coordinate system.

As an example, when the target beam system mechanical model is a three-link beam system mechanical model, the map correction information may be obtained by the following formula:

$$\begin{bmatrix} F_1^1 \\ F_2^1 + F_2^2 \\ F_3^2 + F_3^3 \\ F_4^3 \end{bmatrix} = \left( \begin{bmatrix} K_{11}^1 & K_{12}^1 & 0 & 0 \\ K_{21}^1 & K_{22}^1 + K_{22}^2 & K_{23}^2 & 0 \\ 0 & K_{32}^2 & K_{33}^2 + K_{33}^3 & K_{34}^3 \\ 0 & 0 & K_{43}^3 & K_{44}^3 \end{bmatrix} + \begin{bmatrix} k_1 & 0 & 0 & 0 \\ 0 & k_2 & 0 & 0 \\ 0 & 0 & k_3 & 0 \\ 0 & 0 & 0 & k_4 \end{bmatrix} \right) \begin{bmatrix} v_1 \\ v_2 \\ v_3 \\ v_4 \end{bmatrix}$$

$$k = \begin{bmatrix} el & 0 & 0 \\ 0 & el & 0 \\ 0 & 0 & 0 \end{bmatrix}$$

In the formula, F may represent a node force parameter, k may represent a fixed coefficient of elasticity, the coefficient of elasticity may be set by a user or obtained through calculation, e and 1 may be constants, v may represent a displacement of a node in a global coordinate system, and subscripts 1, 2, 3, and 4 may represent different nodes, respectively, so as to represent node force parameters and/or coefficients of elasticity and/or displacements in the global coordinate system of different nodes.

In step 407, the data of the at least two maps are fused in accordance with the map correction information.

In the embodiment of the present disclosure, the data of at least two maps for the target area are acquired, the target beam system mechanical model for the target area is determined, the connection relation information for the road in the target area is determined by using the data of the at least two maps, the correction amount for the road in the target area is determined by using the data of the at least two maps, the total stiffness matrix for the target beam system mechanical model is determined by using the connection relation information, the node force parameters for the target beam system mechanical model are determined by using the correction amount, the map correction information is obtained by combining the total stiffness matrix, the node force parameters and the target beam system mechanical model, and the data of the at least two maps are fused in accordance with the map correction information. Thus, the maps are fused by combining the global coordinate information, the total stiffness matrix, the node force parameters and the target beam system mechanical model, avoiding a problem of changing a road relation caused by fusion in a weighted average method, eliminating an operation of image processing on the map data, reducing the calculation, and guaranteeing a precision of map fusion.

It should be noted that, in order to simplify description, method embodiments of the present disclosure are expressed as a series of action combinations, but it would be appreciated by those skilled in the art that the embodiments of the present disclosure are not limited to the order of the actions, for the reason that according to embodiments of the present disclosure, some steps may be executed in other orders or be executed simultaneously. In addition, it would be further appreciated by those skilled in the art that embodiments described in the specification are preferred embodiments, and actions involved therein may not be necessary for the embodiments of the present disclosure.

Referring to FIG. 5, FIG. 5 is a schematic diagram of a structure of a vehicle for map fusion according to an embodiment of the present disclosure. The vehicle may specifically include a map data acquisition module 501, a model and connection relation determining module 502, a map correction information obtaining module 503, and a map data fusion module 504.

The map data acquisition module 501 is configured to acquire data of at least two maps for a target area.

The model and connection relation determining module 502 is configured to determine a target beam system mechanical model for the target area, and determine connection relation information for a road in the target area by using the data of the at least two maps.

The map correction information obtaining module 503 is configured to obtain map correction information based on the target beam system mechanical model and the connection relation information.

The map data fusion module 504 is configured to fuse the data of the at least two maps in accordance with the map correction information.

In an embodiment of the present disclosure, the map correction information obtaining module 503 further includes a correction amount determining sub-module and a map correction information obtaining sub-module.

The correction amount determining sub-module is configured to determine a correction amount for the road in the target area by using the data of the at least two maps.

The map correction information obtaining sub-module is configured to obtain the map correction information based on the target beam system mechanical model, the connection relation information, and the correction amount.

In an embodiment of the present disclosure, the map correction information obtaining sub-module further includes a total stiffness matrix determining unit, a node force parameter determining unit, and a combining unit.

The total stiffness matrix determining unit is configured to determine a total stiffness matrix for the target beam system mechanical model by using the connection relation information.

The node force parameter determining unit is configured to determine node force parameters for the target beam system mechanical model by using the correction amount.

The combining unit is configured to obtain the map correction information by combining the total stiffness matrix, the node force parameters and the target beam system mechanical model.

In an embodiment of the present disclosure, the total stiffness matrix determining unit further includes a unit stiffness matrix determining subunit, a coordinate transformation matrix determining subunit, a global coordinate information determining subunit, a target beam system mechanical model total stiffness matrix determining subunit.

The unit stiffness matrix determining subunit is configured to determine a plurality of unit stiffness matrices by using the connection relation information.

The coordinate transformation matrix determining subunit is configured to determine a coordinate transformation matrix by using the data of the at least two maps.

The global coordinate information determining subunit is configured to obtain global coordinate information by combining the plurality of unit stiffness matrices and the coordinate transformation matrix.

The target beam system mechanical model total stiffness matrix determining subunit is configured to determine the total stiffness matrix for the target beam system mechanical model by using the global coordinate information.

In an embodiment of the present disclosure, the correction amount determining sub-module further includes a maturity information determining unit, an elasticity information and stiffness information determining unit, and a road correction amount determining unit.

The maturity information determining unit is configured to determine maturity information for the data of the at least two maps.

The elasticity information and stiffness information determining unit is configured to determine elasticity information for a node in the target area and stiffness information for the road in the target area by using the maturity information.

The road correction amount determining unit is configured to determine the correction amount for the road in the target area by combining the elasticity information and the stiffness information.

In the embodiment of the present disclosure, the data of at least two maps for a target area are acquired; the target beam system mechanical model for the target area is determined, the connection relation information for the road in the target area is determined by using the data of the at least two maps, the map correction information is obtained based on the target beam system mechanical model and the connection relation information; and the data of the at least two maps are fused based on the map correction information. Thus, the maps are fused by combining the connection relation information for the road, which avoids the condition that the road is disconnected after fusion, eliminates the operation for map optimization, reduces the calculation, and guarantees the precision of map fusion.

An embodiment of the present disclosure further provides an electronic device. The electronic device may include a processor, a memory, and a computer program stored on the memory and executable on the processor, and the computer program, when executed by the processor, implements the method for map fusion as described above.

An embodiment of the present disclosure further provides a computer-readable storage medium having a computer program stored thereon, and the computer program, when executed by a processor, implements the method for map fusion as described above.

Since the device embodiments are basically similar to the method embodiments, the description of the device embodiments is relatively simple. For related description, reference may be made to a corresponding part of the description of the method embodiments.

The embodiments in the specification are described in a progressive manner. Each embodiment focuses on differences from other embodiments. The same or similar parts of the embodiments can be referred to each other.

Those skilled in the art should understand that the embodiments of the present disclosure can be provided as a method, a device, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including but not limited to disk storage, CD-ROM, optical memory, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure have been described, those skilled in the art can make additional changes and modifications to these embodiments once they learn the basic creative idea. Therefore, the attached claims are intended to be interpreted as including the preferred embodiments and all changes and modifications falling within the scope of the embodiments of the present disclosure.

Finally, it should be noted that relational terms herein, such as "first" and "second", are used only for differentiating one entity or operation from another entity or operation, which do not necessarily require or imply that there should be any real relationship or sequence between the entities or operations. Also, terms "comprise", "include" or any other variants thereof are intended to cover non-exclusive including, such that the process, method, article or terminal device including a series of elements not only includes those elements, but also includes other elements that are not explicitly listed, or further include inherent elements of the process, method, article or terminal device. In a case that there are no more restrictions, an element defined by the statement "comprises a ..." does not exclude the presence of additional identical elements in the process, method, article or terminal device that includes said element.

The above provides detailed description of the method for map fusion, the vehicle, the electronic device, and the storage medium provided by the embodiments of the present disclosure. Specific examples are used herein to illustrate the principles and implementations of the present disclosure. The description of the above embodiments is only used to facilitate understanding of the method and a core idea of the present disclosure. In addition, for those skilled in the art, changes can be made to the specific implementations and the scope of application based on the idea of the present disclosure. In summary, the content of the specification should not be construed as a limitation to the present disclosure.

**Claims**

1. A method of map fusion, comprising:

   acquiring data of at least two maps for a target area;
   determining a target beam system mechanical model for the target area, and determining connection relation information for a road in the target area by using the data of the at least two maps;
   obtaining map correction information based on the target beam system mechanical model and the connection relation information; and
   fusing the data of the at least two maps in accordance with the map correction information.

2. The method according to claim 1, wherein said obtaining the map correction information based on the target beam system mechanical model and the connection relation information comprises:

   determining a correction amount for the road in the target area by using the data of the at least two maps; and
   obtaining the map correction information based on the target beam system mechanical model, the connection relation information, and the correction amount.

3. The method according to claim 2, wherein said obtaining the map correction information based on the target beam system mechanical model, the connection relation information, and the correction amount comprises:

   determining a total stiffness matrix for the target beam system mechanical model by using the connection relation information;
   determining node force parameters for the target beam system mechanical model by using the correction amount; and
   obtaining the map correction information by combining the total stiffness matrix, the node force parameters and the target beam system mechanical model.

4. The method according to claim 3, wherein said determining the total stiffness matrix for the target beam system mechanical model by using the connection relation information comprises:

   determining a plurality of unit stiffness matrices by using the connection relation information;
   determining a coordinate transformation matrix by using the data of the at least two maps;
   obtaining global coordinate information by combining the plurality of unit stiffness matrices and the coordinate transformation matrix; and
   determining the total stiffness matrix for the target beam system mechanical model by using the global coordinate information.

5. The method according to claim 2, 3 or 4, wherein said determining the correction amount for the road in the target area by using the data of the at least two maps comprises:

   determining maturity information for the data of the at least two maps;
   determining elasticity information for a node in the target area and stiffness information for the road in the target area by using the maturity information; and
   determining the correction amount for the road in the target area by combining the elasticity information and the stiffness information.

6. The method according to claim 5, wherein said determining the correction amount for the road in the target area by combining the elasticity information and the stiffness information comprises:

acquiring data of a topological map for the target area; and
determining the correction amount for the road in the target area by combining the elasticity information, the stiffness information, and the data of the topological map.

7. The method according to claim 6, wherein said determining the correction amount for the road in the target area by combining the elasticity information, the stiffness information, and the data of the topological map comprises:

determining, from the data of the at least two maps, first road information for the road in the target area;
determining, from the data of the topological map, second road information for the road in the target area by combining the elasticity information and the stiffness information; and
determining the correction amount for the road in the target area by using the first road information and the second road information.

8. A vehicle, comprising:

a map data acquisition module configured to acquire data of at least two maps for a target area;
a model and connection relation determining module configured to determine a target beam system mechanical model for the target area, and determine connection relation information for a road in the target area by using the data of the at least two maps;
a map correction information obtaining module configured to obtain map correction information based on the target beam system mechanical model and the connection relation information; and
a map data fusion module configured to fuse the data of the at least two maps based on the map correction information.

9. An electronic device, comprising a processor, a memory, and a computer program stored on the memory and executable on the processor, wherein the computer program, when executed by the processor, implements the method of map fusion according to any one of claims 1 to 7.

10. A computer-readable storage medium having a computer program stored thereon, wherein the computer program, when executed by a processor, implements the method of map fusion according to any one of claims 1 to 7.

| Acquiring data of at least two maps for a target area | 101 |

↓

| Determining a target beam system mechanical model for the target area, and determining connection relation information for a road in the target area by using the data of the at least two maps | 102 |

↓

| Obtaining map correction information based on the target beam system mechanical model and the connection relation information | 103 |

↓

| Fusing the data of the at least two maps in accordance with the map correction information | 104 |

FIG. 1

| Acquiring data of at least two maps for a target area | 201 |

↓

| Determining a target beam system mechanical model for the target area, and determining connection relation information for a road in the target area by using the data of the at least two maps | 202 |

↓

| Determining a correction amount for the road in the target area by using the data of the at least two maps | 203 |

↓

| Obtaining map correction information based on the target beam system mechanical model, the connection relation information, and the correction amount | 204 |

↓

| Fusing the data of the at least two maps in accordance with the map correction information | 205 |

FIG. 2

| | |
|---|---|
| Acquiring data of at least two maps for a target area | 301 |
| Determining a target beam system mechanical model for the target area, and determinIng connection relation information for a road in the target area by using the data of the at least two maps | 302 |
| Determining maturity information for the data of the at least two maps | 303 |
| Determining elasticity information for a node in the target area and stiffness information for the road in the target area by using the maturity information | 304 |
| Determining correction amount for the road in the target area by combining the elasticity information and the stiffness information | 305 |
| Obtaining map correction information based on the target beam system mechanical model, the connection relation information, and the correction amount | 306 |
| Fusing the data of the at least two maps in accordance with the map correction information | 307 |

FIG. 3

| Acquiring data of at least two maps for a target area | 401 |

| Determining a target beam system mechanical model for the target area, and determining connection relation information for a road in the target area by using the data of the at least two maps | 402 |

| Determining a correction amount for the road in the target area by using the data of the at least two maps | 403 |

| Determining a total stiffness matrix for the target beam system mechanical model by using the connection relation information | 404 |

| Determining node force parameters for the target beam system mechanical model by using the correction amount | 405 |

| Obtaining map correction information by combining the total stiffness matrix, the node force parameters and the target beam system mechanical model | 406 |

| Fusing the data of the at least two maps in accordance with the map correction information | 407 |

FIG. 4

| Map data acquisition module 501 |

| Model and connection relation determining module 502 |

| Map correction information obtaining module 503 |

| Map data fusion module 504 |

FIG. 5

## INTERNATIONAL SEARCH REPORT

| International application No. |
| --- |
| **PCT/CN2021/101578** |

**A. CLASSIFICATION OF SUBJECT MATTER**

G06F 16/29(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 地图, 数据, 融合, 梁, 力学, 模型, 连接, 连通, 拓扑, 修正, 校正, map, data, fus+, beam, mechanical, model, connect+, topolog+, correct+, modif+, adjust+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 111831776 A (GUANGZHOU XIAOPENG INTERNET OF VEHICLES TECHNOLOGY CO., LTD.) 27 October 2020 (2020-10-27) claims 1-10 | 1-10 |
| A | CN 110083668 A (ZONGMU TECHNOLOGY (SHANGHAI) LIMITED COMPANY) 02 August 2019 (2019-08-02) description, paragraphs [0065]-[0111] | 1-10 |
| A | CN 102374866 A (WUHAN KOTEI INFORMATICS CO., LTD.) 14 March 2012 (2012-03-14) entire document | 1-10 |
| A | CN 107826105 A (TSINGHUA UNIVERSITY) 23 March 2018 (2018-03-23) entire document | 1-10 |
| A | CN 110986969 A (OPPO GUANGDONG MOBILE COMMUNICATIONS CO., LTD.) 10 April 2020 (2020-04-10) entire document | 1-10 |
| A | US 2020167934 A1 (GM GLOBAL TECHNOLOGY OPERATIONS LLC.) 28 May 2020 (2020-05-28) entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 September 2021** | **24 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/101578**

| Patent document cited in search report | | | Publication date (day/month/year) | Patent family member(s) | | | Publication date (day/month/year) |
|---|---|---|---|---|---|---|---|
| CN | 111831776 | A | 27 October 2020 | None | | | |
| CN | 110083668 | A | 02 August 2019 | None | | | |
| CN | 102374866 | A | 14 March 2012 | None | | | |
| CN | 107826105 | A | 23 March 2018 | None | | | |
| CN | 110986969 | A | 10 April 2020 | None | | | |
| US | 2020167934 | A1 | 28 May 2020 | DE | 102019115240 | A1 | 28 May 2020 |
| | | | | CN | 111220167 | A | 02 June 2020 |

Form PCT/ISA/210 (patent family annex) (January 2015)

**EP 3 968 177 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010688817